# EUROPEAN PATENT APPLICATION

(11) **EP 2 042 232 A1**
(43) Date of publication of application: **01.04.2009**
(21) Application number: 08161202.0
(22) Date of filing: 25.07.2008
(51) Int. Cl.: B01F 13/00, B01F 13/02, B01L 3/02

(54) **Systems and methods for mixing materials**

(30) Priority: 25.07.2007 US 951900 P
(71) Applicant: Symyx Technologies, Inc., Sunnyvale, CA 94085 (US)
(72) Inventor: Carlson, Eric D., Sunnyvale, CA 94085 (US); Huffman, Dave, Sunnyvale, CA 94085 (US); Gavranovic, Grant, Sunnyvale, CA 94085 (US); Lambert, Stephen Mark, Sunnyvale, CA 94085 (US); Wu, Luping, Sunnyvale, CA 94085 (US)
(74) Representative: Eisenführ, Speiser & Partner

(57) **Abstract**

A system for mixing powdered materials includes a cannula and an actuator adapted to vibrate the cannula. An optional fluid delivery system is operable to add fluid to the powdered mixture through the cannula. The cannula can be extended into a powder bed and vibrated by the actuator to mix the powder bed. Fluid can be added to the powder bed through the cannula. The systems and methods are suitable for preparing relatively small quantities of candidate mixtures for high-throughput screening. Sample mixtures prepared by the mixing system can be pressed into tablets that are substantially devoid of foreign objects used to mix the samples. The sample mixtures can be subjected to one or more tests, such as an accelerated aging or forced degradation test, to assess one or more characteristics of the sample mixtures.

## Description

### CROSS REFERENCE TO RELATED APPLICATIONS

This application claims priority to U.S. provisional application No. 60/951,900 filed July 25, 2007, the entire contents of which are hereby incorporated by reference.

### FIELD OF THE INVENTION

The present invention relates generally to systems and methods for mixing powders and other solid materials, and more particularly to such systems and methods adapted to prepare a plurality of relatively small mixed samples for high-throughput screening.

### BACKGROUND

Automated powder dispensing systems are used in many laboratory and commercial applications. In the pharmaceutical industry, for example, such systems are used to fill capsules with small but accurate doses of drugs, typically using gravimetric or volumetric techniques. These systems suffer various disadvantages, including an inability to handle a wide range of particulate materials at optimal speeds and accuracies, particularly when very small doses are involved (e.g., 20 mg or less). Further, the operation of conventional systems tends to crush the particles being handled.

Automated powder handling systems also have application to high throughput research. For example, they can be used for high throughput catalysis research where catalyst candidates are evaluated using various screening techniques known in the art. See, for example, U.S. Patent No. 5,985,356, U.S. Patent No. 6,004,617, U.S. Patent No. 6,030,917, U.S. Patent No. 5,959,297, U.S. Patent No. 6,149,882, U.S. Patent No. 6,087,181, U.S. Patent No. 6,063,633, U.S. Patent No. 6,175,409, and International (PCT) Patent Publications WO 00/09255, WO 00/17413, WO 00/51720, WO 00/14529, each of which is hereby incorporated by reference in its entirety for all purposes.

The efficiency of a high throughput discovery program is, in general, limited by rate-limiting steps of the overall process work flow. One such rate-limiting step has been the mechanical pretreatment and handling of catalyst candidates after synthesis but before screening. U.S. Patent No. 6,755,364, which is hereby incorporated herein by reference in its entirety for all purposes, is directed to more efficient protocols and systems for effecting the mechanical treatment of materials, and especially, mechanical treatment of catalysis materials such as heterogeneous catalysts and related materials. The disclosed protocols provide an efficient way to prepare catalysis materials having a controlled particle size for optimal screening. The circumstances are similar in the pharmaceutical industry. For example, processes used to screen one or more excipients (i.e., diluents, pH modifiers, viscosity modifiers, stabilizers, flavorings, colorings, fillers and combinations thereof) for suitability for use with one or more active pharmaceutical ingredients can involve preparation and handling of powdered samples. Commonly assigned U.S. Patent Publication No. 2004/0219602, which is hereby incorporated by reference in its entirety for all purposes, describes forced degradation testing of excipients, including a description of analytic methods for using high throughput techniques to screen powdered excipients. Similar methods can be used to screen the compatibility of one powdered active ingredient with one or more other powdered active ingredients. Likewise, high throughput techniques can be applied to the creation and testing of various powdered polymorphs of drug candidates, such as is described in commonly assigned PCT Publication No. WO 03/014732, hereby incorporated by reference in its entirety for all purposes.

In some cases two or more different powders, such as an active ingredient and one or more excipients, are mixed together for further analysis. Many powder handling systems are based on the premise that any powdered ingredients in a sample will be dissolved in a solution, thereby obviating the need to mix powdered ingredients in their powdered form. But some research requires the powders to be mixed while in their powdered form. For example, a powdered mixture may be formed into a tablet for pharmaceutical testing. It may also be desirable to conduct various spectroscopic, X-ray, or other solid-phase analyses on powdered mixtures. Techniques for mixing powders are disclosed in U.S. Patent No. 7,134,459, hereby incorporated by reference in its entirety for all purposes.

A stirrer, such as the end of a pipette, a stirring bar, or a milling ball can be used to mix powders. Unfortunately, removal of the stirrer after mixing can alter the sample composition because one powder may have more or less affinity for the stirrer than other powders in the sample. Consequently, removal of the stirrer risks disproportionate removal of one or more powders in a residue on the stirrer. When the sample size is small, as is typically the case in combinatorial chemistry, the problem is exacerbated because disproportionate removal of relatively smaller amounts of powder significantly alters the overall sample composition. Thus, it is common practice to leave at least the portion of the stirrer that contacts the powder in the sample to avoid removal of any residue. For example, the tip of a pipette can be broken off and left in the sample container. Likewise, stirring bars and milling balls are often left in the sample after mixing. Not only does this consume the stirrer, but there is also a chance that the continuing presence of the stirrer could affect the sample analysis or limit the types of analyses that can be performed. Furthermore, if mixed powder samples are to be pressed into tablets for ingestion (e.g., in a pharmaceutical trial), it would be preferable to avoid including foreign objects like milling balls and pipette tips in the tablets.

Similar rate limiting steps and/or the need to mix powders can arise whenever a process requires preparation and handling of powdered materials. This can be the case during synthesis or screening of pharmaceuticals and catalysts (as already mentioned) as well as agricultural chemicals, pigments, and flavorings to name just a few of the other applications for powder handling systems.

### SUMMARY

The invention includes methods and apparatus implementing techniques for mixing solid materials. In some embodiments, one or more fluids are also added to the materials.

In general, in one aspect, the invention includes an apparatus for mixing one or more solid materials. The apparatus includes a powder mixing device mounted above a platform for holding one or more sample vessels, a transport system providing for relative motion of the powder mixing device and the platform and for introduction of a second end of a cannula into the one or more sample vessels, and a fluid delivery system for delivering a fluid to a lumen at a first end of the cannula. The powder mixing device includes a cannula and an actuator for vibrating the cannula.

Particular implementations can include one or more of the following features. The transport system can include a robotic arm holding the powder mixing device. The robotic arm can be operable to move the powder mixing device relative to the platform. The fluid delivery system can include a liquid pump fluidically coupled to the lumen by means of a fluid line extending from the liquid pump to the lumen at the first end of the cannula. The apparatus can include a control device operable to control the operation of the powder mixing device, the transport system and the fluid delivery system. The apparatus can include a powder dispensing device operable to dispense one or more powders into the one or more sample vessels on the platform. The apparatus can include a sample block mounted on the platform, the sample block being configured to receive the one or more sample vessels. The apparatus can include a temperature control system for controlling a temperature of the one or more sample vessels on the platform during operation of the powder mixing device. The transport system can include a detection system for detecting liquid and/or powder levels in the one or more sample vessels. The powder mixing device can include a plurality of cannulae mounted above the platform for simultaneously mixing powder samples in a plurality of sample vessels held on the platform.

In general, in another aspect, the invention provides a method for mixing one or more solid materials in a sample vessel. The method includes, introducing a cannula into the sample vessel, vibrating the cannula to mix the powder sample, and introducing a fluid into the powder sample through an outlet at a second end of the cannula during the vibrating. The cannula has a first end, a second end, and a lumen extending generally from the first end to the second end. The cannula is introduced into the sample vessel such that the second end extends into the powder sample.

Particular implementations can include one or more of the following features. The powder sample can include one or more powders dispensed into the sample vessel by means of a powder dispensing hopper mounted on a robotic arm above the platform. The fluid can be introduced by pumping a liquid through the lumen to the outlet. Vibrating the cannula can include exciting the cannula to a predetermined vibration to mix the powder sample. Introducing the cannula can include positioning the cannula over the sample vessel using a robotic arm. The method can include, after the vibrating and the introducing a fluid, removing the cannula from the sample vessel and positioning the cannula over a second sample vessel holding a second powder sample, lowering the cannula into the second sample vessel, and repeating the vibrating and the introducing a fluid for a second powder sample in the second sample vessel. The method can include heating or cooling the sample vessel during the vibrating and the introducing of a fluid. The introducing a cannula, vibrating the cannula, and introducing a fluid can be performed in parallel (e.g., during overlapping times) for a plurality of powder samples in a plurality of sample vessels.

The invention can be implemented to realize one or more of the following advantages, alone or in the various possible combinations. The apparatus and methods described herein are capable of efficiently mixing small quantities of powder swiftly and accurately. Powder mixing is accomplished without the use of a stir bar or other object that is left behind in the mixture, which facilitates the use of the mixture in further processing steps, such as tablet pressing. The ability to add fluids, and in particular liquids, facilitates processes such as compatibility testing or product development workflows. Powders are handled gently and not subjected to harsh crushing forces which might adversely affect one or more physical characteristics (e.g., size) of the particles. Likewise, any number of relatively small mixed powder samples can be prepared efficiently and accurately. The system can readily be scaled up or down to different sizes, according to need. Further, the system is capable of handling a wide range of powders having different particle sizes and flow characteristics. The system is particularly suited for applications where accuracy and repeatability are important, as in the pharmaceutical, parallel synthesis, and materials research industries.

The details of one or more embodiments of the invention are set forth in the accompanying drawings and the description below. Other features, objects, and advantages of the invention will be apparent from the description and drawings, and from the embodiments.

### BRIEF DESCRIPTION OF THE DRAWINGS

FIG. 1 is a perspective of one embodiment of a powder mixing system of the present invention;

FIGS. 2A and 2B are side elevations of one embodiment of a mixing device of the powder mixing system;

FIGS. 3A and 3B are perspectives illustrating one embodiment of a sequence in which the mixing device is inserted into a vessel to mix materials in the vessel;

FIG. 4 is cross section of a portion of the mixing device showing one embodiment of a cannula outlet suitable for adding a fluid to the vessel;

FIG. 5 is a side elevation similar to FIG. 2B but in which the cannula outlet is positioned above a sample contained in the vessel;

FIG. 6 is a cross section of a portion of a cannula showing another embodiment of a cannula outlet suitable for adding fluid to the vessel;

FIGS. 7A, 8A, and 9A are photographs of three different unmixed powder samples and FIGS. 7B, 8B, and 9B are photographs of the powder samples after they have been mixed by the systems and methods of the present invention; and

FIG. 10 is a flow diagram illustrating one embodiment of a design for a parallel drug-excipient mixing experiment using systems and methods of the present invention.

Corresponding reference characters indicate corresponding parts throughout the drawings.

### DETAILED DESCRIPTION

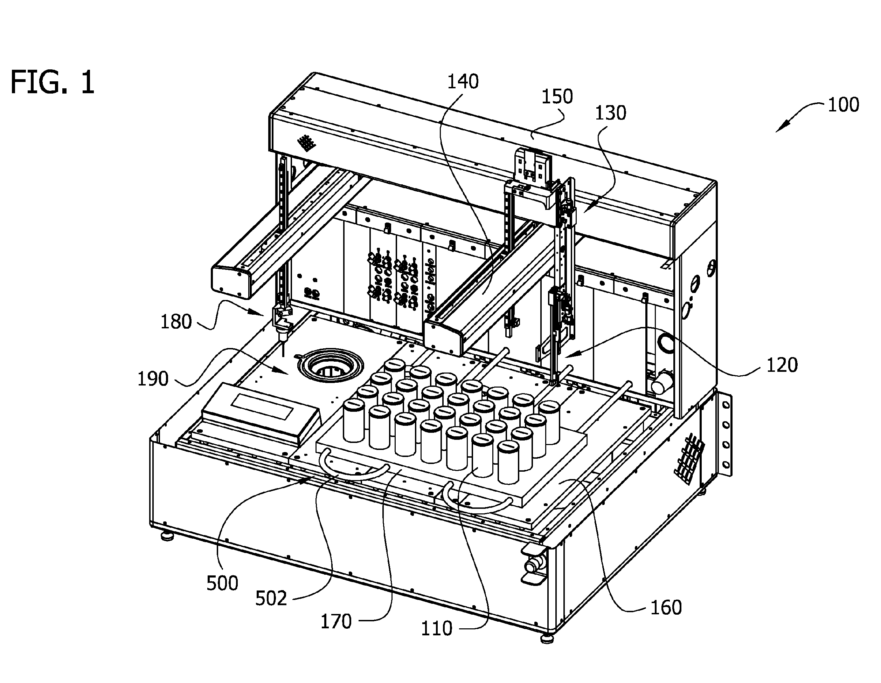

Referring to FIG. 1, one embodiment of a powder mixing system of the present invention is designated in its entirety by the reference numeral 100. In general, the system is adapted for mixing powders held in one or more vessels 110. As used herein, the term "powder" broadly includes particles having a particle size distribution with a mean particle size ranging from about 10 nm to about 1 mm (e.g., from about 1 µm to about 500 µm).

The system 100 includes a powder mixing device 120. The powder mixing device 120 is suitably mounted on a transport system 130, which in the illustrated embodiment includes a robot arm 140 mounted on a track 150 above a work surface 160 (e.g., a platform). In the particular embodiment of FIG. 1, the one or more sample vessels 110 comprise an array of sample vessels (e.g., an array of 96 such vessels) in a monolithic block 170 or other holder. The size and shape of the sample vessels 110 can vary. Similarly, the number and arrangement of such vessels and receptacles forming the array can vary. In FIG. 1, there are 28 vessels 110 held in the block 170 supported by the platform within the operating envelope of transport system 130. The transport system 130 is programmable in conventional fashion to move the mixing device 120 between sample vessels 110 in a sequential fashion for mixing. Other types of conveying devices may be used to transport the mixing device 120 within the scope of the invention. Alternatively, the powder mixing device 120 can remain fixed, and the sample vessels 110 be moved relative to the mixing device, as by one or more conveyors, turntables or other mechanisms within the scope of the invention. Suitable transport systems are generally known to those skilled in the art and will not be discussed in detail herein.

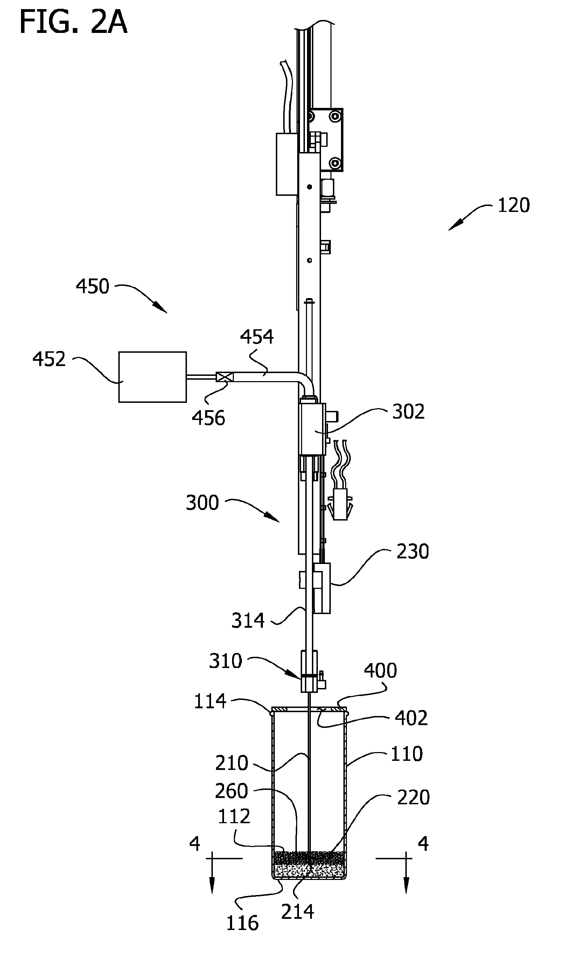

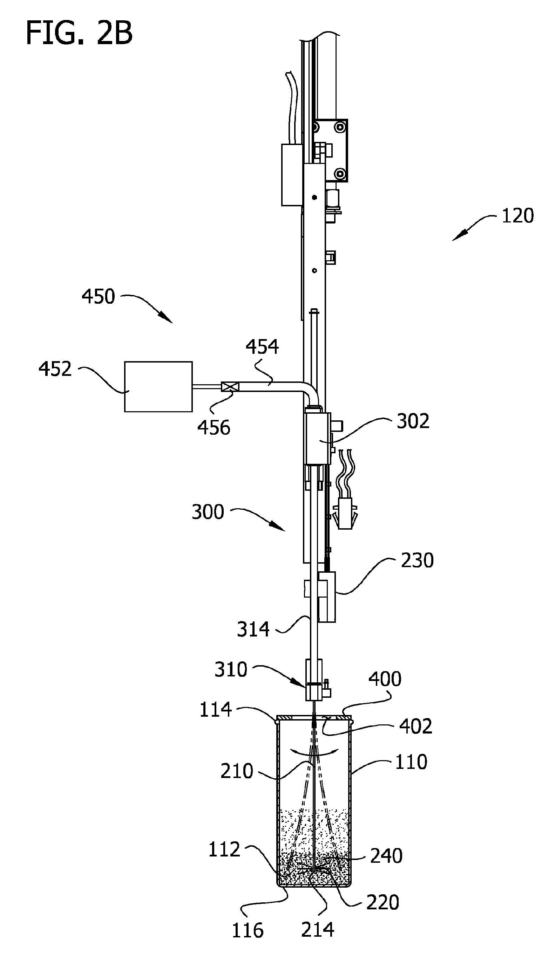

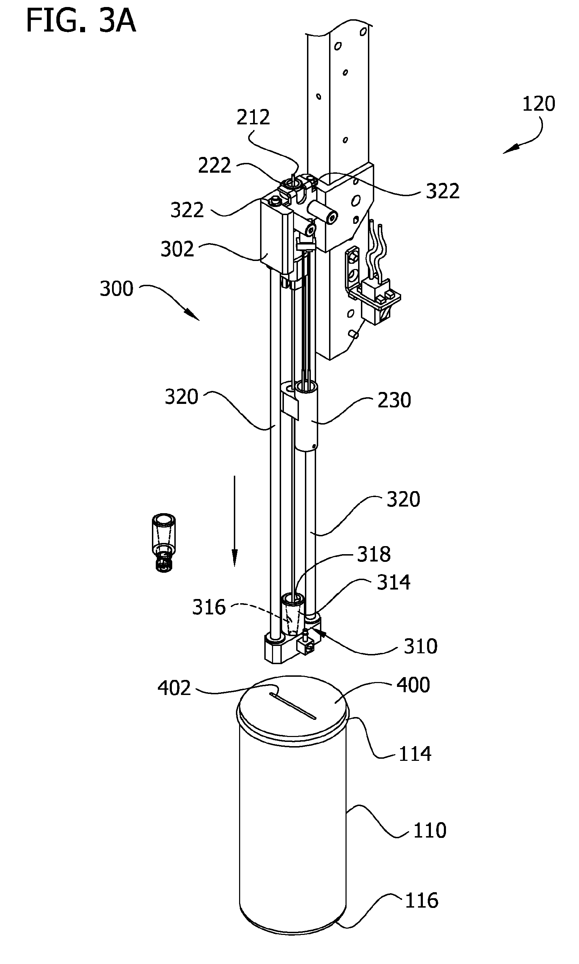

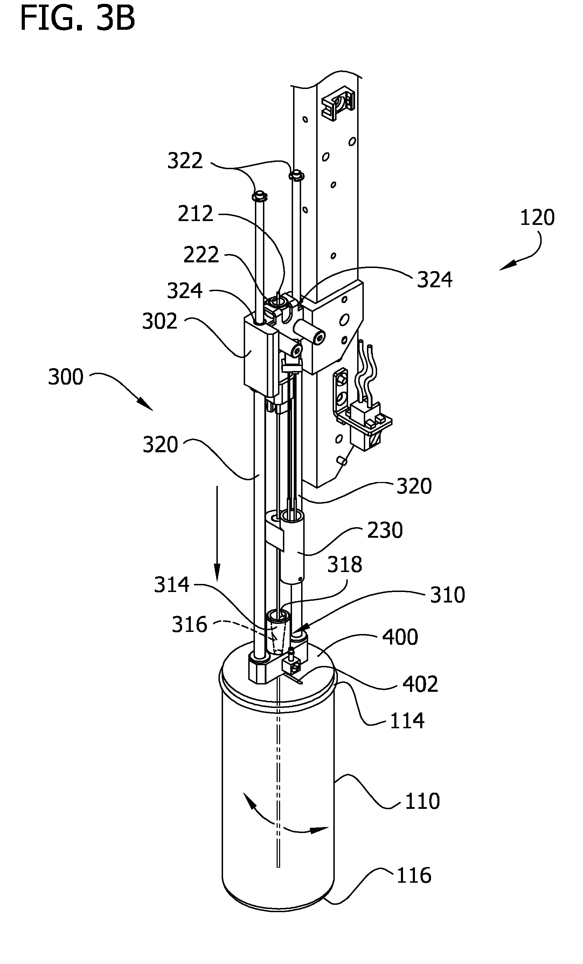

FIGS. 2A and 2B illustrate one embodiment of the powder mixing device 120. The powder mixing device 120 includes a cannula 210 (broadly, an elongate rod) that can be inserted into a powder sample 112. The cannula 210 can be made of a suitable polymeric material (e.g., polycarbonate), metal (e.g., stainless steel), or a ceramic. Preferably, the cannula 210 is made of a material that is inert or at least chemically resistant to the environment in which it is expected to be used. The dimensions of the cannula 210 can vary without departing from the scope of the invention. For example, the cannula 210 can suitably be made from a segment of 316 stainless steel tubing having an outer diameter of about 0.042 inches and a sufficient length to extend one end of the cannula into a powder sample 112. The cannula 210 in the illustrated embodiment is mounted on a bracket 300, which is best illustrated in Figs. 3A and 3B. The bracket 300 comprises a mounting block 302 which is adapted to hold the cannula 210 (e.g., adjacent the upper end 312 of the cannula when oriented as illustrated in FIGS. 3A and 3B) so the cannula can be moved by using the transport system 130 to move mounting block.

An actuator 230 is operable to vibrate the cannula 210 to mix the powder sample 112 as shown in FIG. 2B. The actuator 230 is suitably a motor and an eccentric mass rotated by the motor to produce the desired vibrations. The eccentric motor 230 can be mounted directly on the cannula 210 and can be of conventional design. For example, the motor can be a 1.3 DC vibrating motor having a rated RPM of 7500 at 1.3VDC, such as is commercially available from Jameco, Part No. 190078. The actuator 230 is suitably secured to the cannula 210 and spaced from the mounting block 302 (e.g, a few inches) to facilitate vibration of the cannula in response to movement of the actuator.

The actuator 230 is operable to produce vibrations at a suitable frequency and amplitude which may vary depending on various factors, including the type of powder being handled. Vibration of the cannula 210 can be varied under control of a control system (not shown) that controls operation of the actuator 230. Thus, for example, for relatively dry powders the actuator 230 can be operated to produce a gentle sinusoidal vibration. On the other hand, for particles which tend to agglomerate, a larger amplitude of vibration may be used to promote the free flow of particles. The control system can also vary the frequency of vibration. The frequencies of the vibrations are suitably within the range of about 20 Hz-1000 Hz, and more particularly within the range of about 30 Hz-400 Hz.

The term "vibration" is used in a broad sense to mean the application of alternating or oscillating forces (e.g., tapping or shaking forces) to the cannula 210 tending to disturb the particles in the powder sample to promote mixing. Although the actuator 230 in the illustrated embodiment is an eccentric motor, it is contemplated that other actuators (e.g., piezoelectric actuators) can be used to vibrate the cannula 210. It is also contemplated that vibrations may be transmitted to the cannula 210 to energize its vibration through one or more intermediate non-energizing structures within the scope of the invention.

The sample vessels 110 have an open end 114 and a closed end 116. The sample vessels 110 of the illustrated embodiment have a generally cylindrical shape, but the sample vessel could have practically any shape within the scope of the invention. The system 100 is suitably operable to mix relatively small powder samples 112 in relatively small vessels 110. For example, the sample vessels 110 suitably have a total volumetric capacity of about 50 ml or less, more suitably about 20 ml or less, more suitably in the range of about 0.1 ml to about 20 ml, more suitably in the range of about 0.1 ml to about 10 ml, more suitably in the range of about 0.1 ml to about 2 ml, and even more suitably in the range of about 0.1 ml to about 1 ml. Likewise, the system 100 is suitably operable to mix powder samples 112 comprising less than about 5 grams of powder per sample, more suitably less than about 500 mg of powder per sample, more suitably less than about 100 mg of powder per sample, more suitably less than about 50 mg of powder per sample, more still more suitably less than about 25mg of powder per sample. The size of the powder samples can vary depending on the particular application and it is possible that the system 100 is adapted to mix only relatively larger samples within the scope of the invention, particularly when the system is used in applications in which the cost and availability of materials used to make the powder samples are not limiting.

Preferably, the size and shape of the sample vessels 110 will be such that there will ample room for mixing of powders in the vessels. For example, if the vessel 110 is cylindrical, it is desirable that its diameter be equal to or greater than the depth of the powder bed 112 to be formed and mixed therein. Likewise, it is desirable that the vessel 110 have sufficient height (e.g., at least three time the height of the powder bed) to provide ample head space for the powder 112 to circulate during mixing. Optionally, the system 100 can include one or more removable closures to seal the open end 114 of sample vessels 110 around the cannula 210 to prevent loss of powder during mixing. For example a sealing mat or gasket (not shown) can be placed over the sample vessels 110 on the block 170. Alternatively, a septum or other pierceable seal can be positioned over the open end of each sample vessel 110. As illustrated in FIG. 3A, in the illustrated embodiment, a lateral slit 402 has been made in a releasable closure 400 (e.g., septum) placed over the open end 114 of the vessel 100. The cannula 210 can extend through the slit 402 into the vessel 110 and move back and forth within the slit when it is vibrated by the actuator 230. Although the illustrated embodiment includes a separate closure 400 for each vessel 110, it is understood that a single closure (e.g., mat or gasket) may be used to seal multiple vessels and multiple lateral slits can be provided therein, one for each of the vessels.

It will be appreciated from the foregoing that the vessels 110 may be relatively small and have correspondingly small open ends 114. Also, the cannula 210 can be a relatively flexible and somewhat fragile structure, raising the possibility that damage could result if the cannula is not aligned properly with the open end of a vessel 110 as it is being inserted into the vessel. The bracket 300 in the illustrated embodiment includes a cannula guide 310 operable to guide movement of the cannula 210 into the vessels 110 to reduce the risk that misalignment of the cannula with the open end of the vessel (whether due to positional error, deformation of the cannula, or a combination of these and/or other reasons) will impact insertion of the cannula into the vessel.

As illustrated in FIGS. 3A and 3B, for instance, the cannula guide 310 includes a collar 314 having a funnel-shaped inner surface 316 oriented so its wider opening faces toward the mounting block 302. A pair of rails 320 are positioned on opposite sides of the cannula 210 and slideably mounted on the mounting block 302. One end of each rail 320 is secured to the collar 314. The rails 320 extend through openings 324 in the mounting block 302 and have enlarged heads 322 at ends on the side of the mounting block opposite the collar 314. The enlarged heads 322 are too big to pass through the openings 324. The enlarged heads 322 and collar 314 thereby prevent separation of the rails 320 from the mounting block 302. For example, when oriented as shown in the drawings, the enlarged heads 322 prevent the rails 320 from falling out of the mounting block 302 under the force of gravity. The rails 320 hold the collar 314 in alignment with the longitudinal axis of the undeformed cannula 210. When the enlarged heads 322 are positioned (e.g., by gravity) adjacent the mounting block 302, the collar 314 is positioned at least partially beyond the terminal end 214 of the cannula 210.

As the mixing device 120 approaches one of the vessels 110, the collar 314 engages the vessel at its open end 114. Continued movement of the mixing device 120 toward the vessel 110 causes the mounting block 302 to slide on the rails 320 toward the collar (carrying the cannula 210 along with it further toward and into the vessel) as the collar 314 and rails are held stationary by the vessel. If the cannula 210 is too far out of alignment, the cannula engages the funnel-shaped inner surface 316 of the collar 314, which guides the cannula toward a more aligned position. This can prevent damage to the cannula 210 and/or vessel 110.

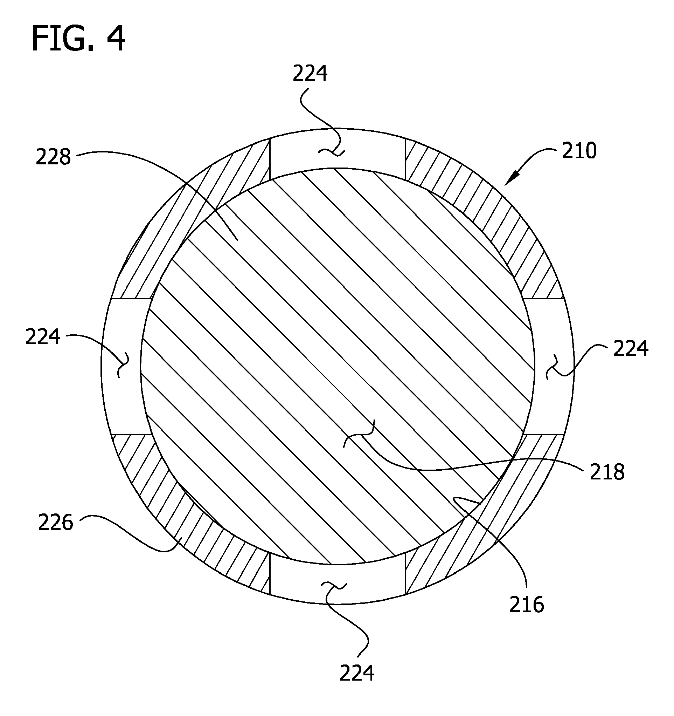

In the illustrated embodiment, the cannula 210 has an internal surface 216 (FIG. 4) defining a lumen 218 extending from a cannula inlet 222 to a cannula outlet 220 spaced longitudinally from the inlet on the cannula. A fluid delivery system 450 (discussed in more detail below) is operable to add fluid to the powder sample 112 through the lumen 218. The diameter of the lumen 218 can vary within the scope of the invention. For example, the diameter of the lumen 218 can suitably be about 0.035 inches. The cannula outlet can be shaped to provide for particular fluid flow properties, such as a uniform fluid stream or spray, depending on what is needed or desired for a particular application.

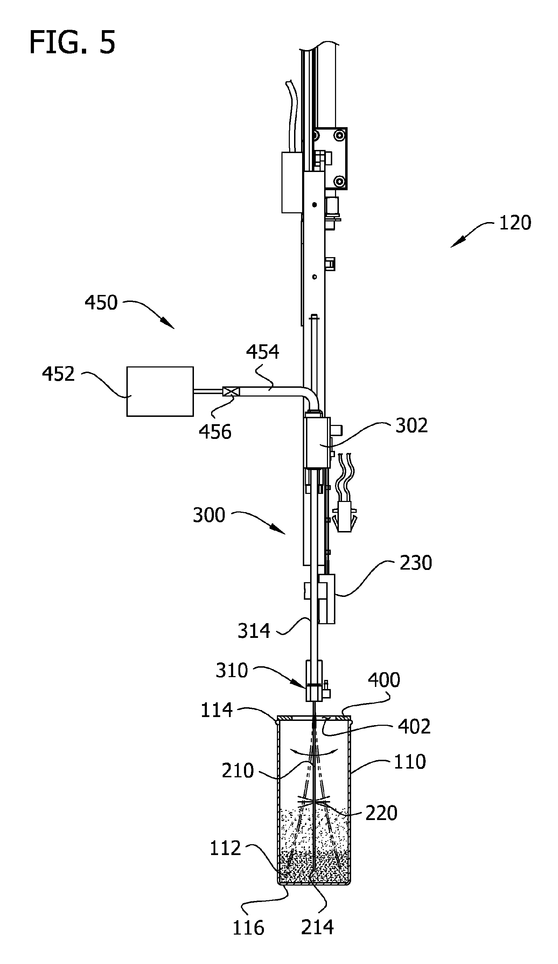

In the illustrated embodiment, the cannula outlet 220 comprises a plurality of holes 224 (FIG. 4) extending through the cannula sidewall 226 and collectively defining the cannula outlet. The cannula outlet 220 is spaced from the terminal end 214 of the cannula, which is suitably plugged by a plug 228. The plug 228 suitably extends generally from the terminal end 214 of the cannula 210 to adjacent the outlet 220 to reduce dead volume in the cannula. The mixing device 120 can be positioned so the cannula outlet 220 is within the powder bed 112 to add fluid to the powder bed at a location below the surface of the powder bed, as illustrated in Fig. 2B. Because the cannula outlet 220 is spaced from the terminal end 214 of the cannula 210, it is also possible to position the mixing device 120 so the terminal end 214 of the cannula is in the powder bed 112 and the cannula outlet 220 is above the powder bed (FIG. 5). The ability to position the mixing device 120 so the terminal end 214 of the cannula is in the powder bed 112 and the outlet 220 is above the powder bed allows a fluid (e.g., liquid) to be sprayed onto the upper surface of the powder bed 112 while the cannula 210 is vibrated to mix the powder sample, as illustrated in Fig. 5. Positioning the cannula outlet 220 above the powder bed 112 can also limit the contact between the powder and the outlet and thereby make it less likely for powder to enter the cannula 210 through the outlet than it would be if the cannula outlet were embedded in the powdered bed.

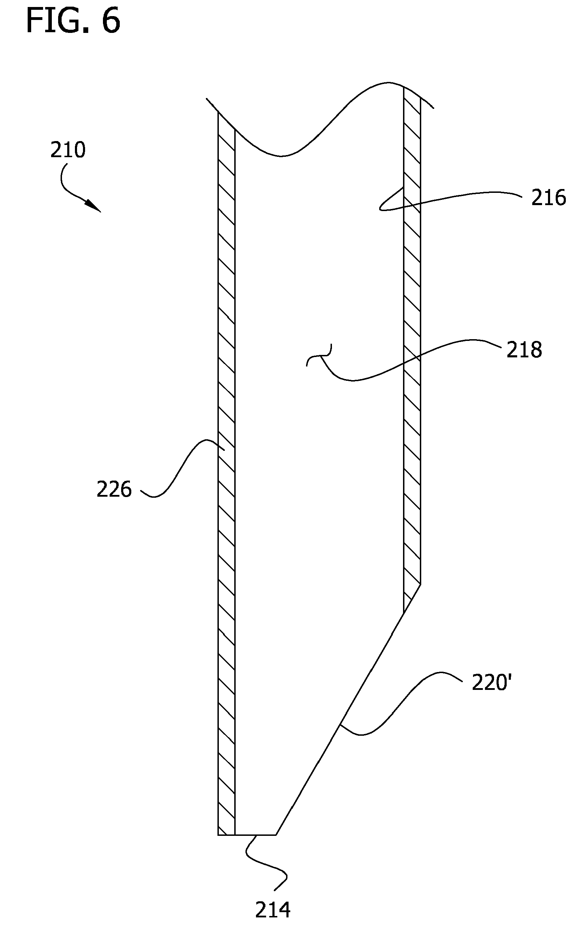

As best illustrated in FIG. 4, the cannula outlet of the illustrated embodiment includes a plurality (e.g., four) laser drilled holes 224 spaced substantially equiangularly from one another about the circumference of the cannula 210 (e.g., about 90 degrees from one another in the case of four holes). The holes 224 are suitably relatively small (e.g., about 0.012 inches in diameter), which limits the opportunity for powder to enter the cannula 210 through the cannula outlet 220. The small size and geometric arrangement of the holes 224 also helps fluid (e.g., liquid) emitted from the outlet to be formed into a relatively fine spray 240 in a spray pattern extending radially outward from the cannula in multiple different directions (e.g., as illustrated in FIGS. 2B and 5) to promote efficient integration of the fluid into the powder sample 112. It is understood that the cannula outlet 220 can have various configurations within the scope of the invention. Another example of a suitable cannula outlet is illustrated in FIG. 6. In this embodiment, the terminal end 214' of the cannula 210 is beveled and the cannula outlet 220' is generally at the terminal end of the cannula.

The fluid delivery system 450 is controlled by the control system to generate a specified flow of fluid through the lumen 218 of cannula 210 during mixing. The type of the fluid flow that is called for can vary depending on the nature of the powder being mixed and the particular application. In the illustrated embodiment, the fluid delivery system 450 (illustrated schematically in Figs. 2A and 2B), suitably includes a pressurized reservoir 452 that is fluidically coupled to the powder mixing device 120 by one or more fluid lines 545 and a flow controller 456 operable to selectively open and close the fluid line. For example, the flow controller 456 can suitably be a micro-metering valve. The use of backpressure from the reservoir 452 to propel fluid through the cannula outlet 220 in combination with a micro-metering valve may be advantageous when the application calls for accurate dispensing of relatively small amounts of fluid, particularly when there is a need or desire to emit the small amount of fluid from the cannula 210 in the form of a spray or jet. Micro-metering valves can accurately dispense small quantities of fluid (e.g. about 0.1 µL to about 10 µL) through the cannula 210. A suitable metering micro-valve is commercially available from Innovadyne Technologies, Inc. (which has a location in Santa Rosa, CA) under the name Nanofill^{™} 1, to provide one example.

Other fluid delivery systems can be used within the scope of the invention. For example, a pump, such as a syringe pump (not shown) can be used to pump fluid to the outlet 220. Optionally, the fluid delivery system also includes a conventional flow controller in the fluid line for controlling the rate of fluid flow that pumped through the cannula 210 by the pump. In some applications, it may be more desirable to use a pump instead of a pressurized reservoir to produce fluid flow through the cannula. For example, the control system can be used to control a pump (e.g., syringe pump) and/or flow controller to provide a variable and controlled flow rate of fluid from the cannula, particularly in applications in which there is a need or desire to add a relatively larger quantity of fluid to the powder sample 112.

The illustrated embodiment of the system 100 also includes a powder dispensing apparatus 180, such as a Powdernium powder dispensing hopper (Symyx Technologies, Inc., Sunnyvale, California) that can be positioned above each of the sample vessels 110 to dispense measured amounts of various powders into the vessels as described, for example, in U.S. Patent No. 7,134,459 and/or U.S. Patent Publication 2007/0006942, which are hereby incorporated by reference in their entirety for all purposes. The transport system 130 (e.g., robot) can suitably move the powder dispensing apparatus 180 between various powder supply containers (not shown) if needed and the vessels 110 to transfer one or more powders to the vessels in such combinations as may be required to produce the desired powder samples. For example, the system 100 is suitable able to accommodate different modes of powder transfer, including transfers involving one source to one destination vessel (one-to-one), one source to multiple destination vessels (one-to-many), or multiple sources to multiple destination vessels (many-to-many).

The illustrated embodiment of the system 100 also suitably includes weighing device 190 (e.g., a scale or balance) that can be used to weigh the vessels to facilitate accurate dispensing of powders and/or fluids to the vessels and/or to confirm that the desired amount of powder and/or fluid has been dispensed to the vessel. Suitable scales, balances, and other weighing devices are disclosed in co-owned U.S. Application No. 11/771,824, U.S. Patent No. 7,134,459 and/or U.S. Patent Publication 2007/0006942, the contents of which are incorporated by reference.

The system 100 optionally includes a liquid and/or powder detecting apparatus, such as a liquid or powder detecting sensor mounted on cannula 210. The sensor is operable to send signals to the control system that allow the control system to determine that the tip of cannula 210 (and/or outlet 220) is located within powder bed 112 before mixing is commenced. For example, a pressure sensor 260 may be positioned on the cannula (e.g., at the terminal end 214) for this purpose. Other types of sensors (e.g., a dielectric sensor) could also be positioned on the cannula for this purpose. Alternatively, a bed height measuring device (not shown) can be provided for this purpose, in the form of an elongate probe supported on a vertical Z axis rod mounted on a second arm of the transport system 130, so that the probe is movable by the robot along X, Y and Z axes. Other sensors known to those skilled in the art can be adapted to provide information about the position of the cannula 210 relative to the powder sample 112 to the control system within the scope of the invention.

The illustrated embodiment of the system 100 also includes a temperature control system 500 to provide for mixing at reduced and/or elevated temperatures and/or a temperature monitoring system to provide for monitoring of temperature in the sample vessels 110 during mixing. A temperature control and monitoring system can be implemented using known technology, such as heating or cooling fluid conduits 502 embedded in the block 170 to provide for transport of heating and/or cooling fluid into block 170 adjacent to the sample vessels 110.

In a method of the invention, the system 100 is used to mix one or more powdered materials 112. The method suitably includes adding one or more fluids to prepare a sample. The fluid can be a gas or liquid, such as water or other aqueous solution. The system allows one to introduce a controlled amount of well-mixed moisture for accelerated aging, or to mimic a wet granulation process. In some cases the materials are mixed stochastically to provide a heterogeneous mixture. However, the powders 112 can be mixed to a lesser extent if that is all the mixing that is needed for a particular application.

The system 100 is suitably used to mix one or more powder samples 112 weighing about 5 grams or less, more suitably less than about 50 mg, and still more suitably about 10 mg or less. For instance, the system is suitably used to mix one or more samples that are suitably between about 0.1 mg to about 5 grams, more suitably between about 0.1 mg and 1 gram, more suitably between about 0.5 mg to about 1 gram, and still more suitably between about 5 mg to about 1 gram.

The powder samples 112 may comprise particles of any size ranging from about 1 µm to about 1 mm. For example, the average size of the powder particles suitably ranges from about 1 µm to about 400 µm, more suitably from about 100 µm to about 400 µm, more suitably from about 1 µm to about 100 µm, and more suitably from about 1 µm to about 50 µm, and still more suitably from about 1 µm to about 25 µm. The method suitably includes using the powder transfer apparatus to transfer a quantity of a first powder to each sample vessel 110 to form a powder bed in the vessel. Optionally, one or more additional (i.e., second) powders and can be added to each sample vessel 110. Preferably, a different powder transfer device is used to dispense each different powder that is used. If two or more different powders are added to a single vessel 110, this results in the formation of an unmixed powder bed the sample vessel 110. As shown in FIG. 2A, this can result in the stratification of different powders in the unmixed powder bed. The same powder(s) can be transferred to each vessel 110 or the composition of the powder(s) in the vessels can vary. Although it is contemplated that use of the powder transfer apparatus may be desirable to transfer the powder(s), it is understood that any apparatus or methods for obtaining vessels containing the powder(s) can be used within the scope of the invention.

At this point, the sample vessels 110 can be sealed if desired by placing a sealing mat or gasket over the sample vessels 110 on block 170, or positioning a septum or other pierceable seal to seal the open end 114 of each sample vessel 110. For example, removable closures 400 having slits 402 formed therein, as described above, may be placed over the open end 114 of each vessel 110.

The transfer system 130 is used to move the mixing device 120 into a first vessel 110 (e.g., as illustrated in FIGS. 3A and 3B) so the terminal end 114 of the cannula 210 is in the powder bed 112 (FIG. 2A). Then actuator 230 is activated to vibrate the cannula 210 (e.g., at a predetermined frequency and/or amplitude) and mix the powder sample 112 in the vessel 110, as illustrated in FIGS. 2B of 5, for example. The fluid delivery system 450 is suitably used to add a fluid to the powder 112 before, during, or between periods of vibration of the cannula 210 by the actuator 230 to mix the sample 112. The same type and amount of fluid may be added to each vessel 110 or the type and/or amount of fluid added can vary from vessel to vessel, depending on the needs of the particular application.

The fluid may be emitted from the cannula outlet 220 as a fluid stream or spray entering the powder bed 112 in the sample vessel 110. For example, the mixing device 120 can be used to add fluid directly into the powder bed 112 below its surface as indicated in FIG. 2B or add the fluid to the upper surface of the powder bed 112 (e.g., as a spray) as indicated in FIG. 6. Once the fluid is in the powder bed 112, the cannula 210 is suitably vibrated by the actuator to facilitate integration of the fluid into the powder bed 112. The characteristics of fluid flow and the manner in which the fluid is integrated into the powder 112 will vary depending on a number of factors including the size and shape of the powder bed, the physical characteristics of the powder(s), and the geometry of the outlet 220 and sample vessel 110. Depending on the particular application, and in particular on the configuration of the cannula and outlet, the velocity/amount of fluid flow produced by the fluid delivery system, and on the nature of the powder(s) and fluid used, the surface of the powder particles may be wetted by the fluid, or the particles may be suspended or dissolved in the fluid during mixing.

After mixing the contents of the first vessel 110, the fluid delivery system 450 and the actuator 220 are deactivated and the cannula 210 is removed from the sample vessel 110. If additional samples remain to be mixed, the transport system 130 moves the mixing device 120 to the next sample vessel 110, where the process is repeated. Although a sequential mixing process has been thus described, the system 100 can include multiple mixing devices 120 - for example, an array of multiple mixing devices - arranged on robot arm 140, such that the mixing devices can be positioned within multiple sample vessels 110 in parallel, to provide for parallel mixing.

The quantities and identities of the powder(s) and fluid(s) used are generally controlled (e.g., by the control system) and may be selected with the aid of suitable software so the mixed sample has a predetermined composition (e.g., a predetermined mixture of powder(s) and a predetermined moisture content). At any time during preparation of the mixed samples the weighing apparatus 190 may be used to meter addition of the desired amount of powder and/or fluid into a vessel 110 and/or confirm that the desired amount of powder and/or fluid has been added to the vesselto help ensure that the predetermined composition is achieved.

Once the samples 112 have been mixed, they can be subjected to any desired further processing or analysis, such as a parallel imaging operation, or parallel fixed bed screening operation as disclosed in U.S. Patent No. 6,149,882, U.S. Patent Publication No. 2002/0170976, U.S. Patent Publication No. 2002/0048536, U.S. Patent Publication No. 2002/0045265, and U.S. Patent Publication No. 2002/0042140, each of which is hereby incorporated by reference in its entirety for all purposes. Such further processing may involve transferring the mixtures to separate vessels. Alternatively, the mixtures may be retained in the same vessels 110 for the additional processing or analysis.

The vessels 110 may be heated or cooled by the temperature control system 500 at any point in sample preparation to meet the needs or desires for a particular application. For instance, the vessels 110 may be heated and/or cooled to control temperature of the vessels to a constant temperature or to two or more different temperatures throughout sample preparation. The heating and/or cooling from the temperature control system 500 may be used after the samples 112 are prepared to facilitate further analysis of the characteristics of the samples if desired (e.g., in a forced degradation experiment).

The method suitably includes preparing and screening a plurality of candidate mixtures in relatively small quantities for high-throughput screening of the candidate mixtures for desirable characteristics. The candidate mixtures are suitably candidates for being produced in large quantities (e.g., by a large scale commercial production process). For example, the large scale process may comprise a wet granulation process.

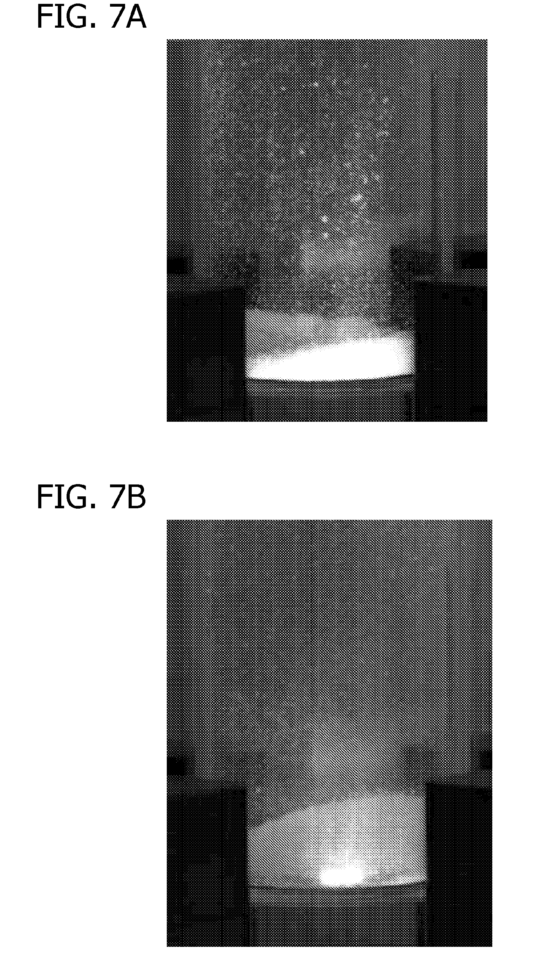

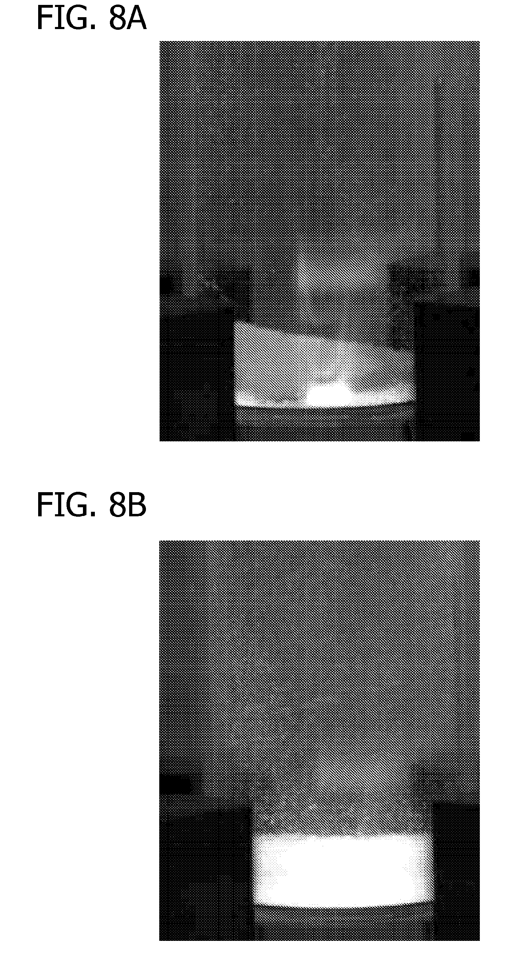

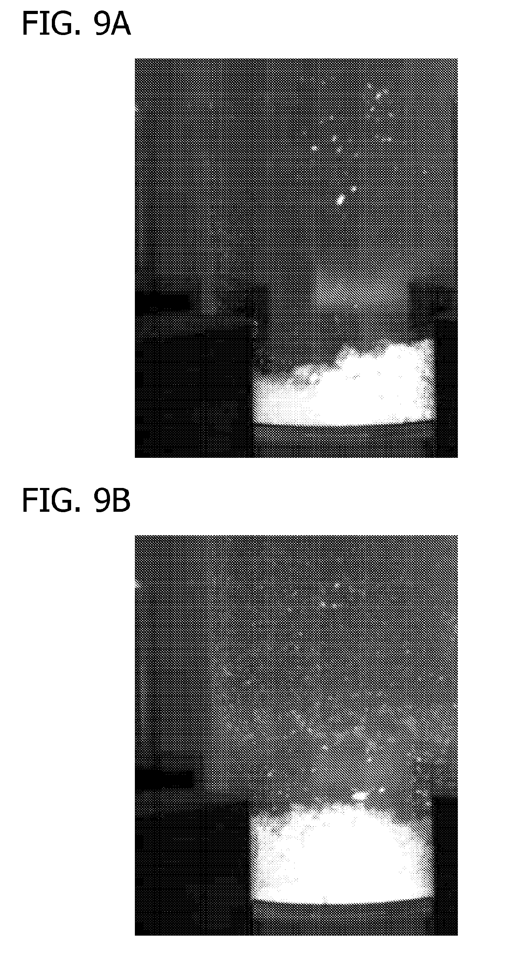

A relatively smaller quantity of a first of said plurality of candidate mixtures is prepared by inserting the cannula 210 of the mixing device 120 into a first powder bed 112 comprising one or more materials. The cannula 210 is vibrated by the actuator to mix the first powder bed 112 and the fluid delivery system 450 is used to add a fluid to the first powder bed via the lumen 218 in the cannula, as described above. The cannula 210 may be vibrated by the actuator 230 to mix the powder bed 112 at the same time fluid is added to the powder bed. The fluid (e.g., a predetermined amount of fluid) is suitably added in a manner selected to mimic the large scale process. For example, if the large scale process is a wet granulation process, the quantity of fluid added by the fluid delivery system may be selected to mimic the wet granulation process. The flow rate and position of the outlet 220 relative to the powder bed 112 may also be controlled in a manner selected to mimic the large scale process. These steps are repeated (which includes being conducted in parallel by a plurality of mixing devices 120) as necessary until a relatively smaller quantity of each of said plurality of candidate mixtures has been prepared. Figures 7A, 8A, and 9A are photographs of three different unmixed pharmaceutical and excipient mixtures and FIGS. 7B, 8B, and 9B are photographs of candidate pharmaceutical/excipient mixtures prepared by adding fluid and mixing the mixtures using the systems and methods described above.

The candidate mixtures are then subjected to at least one screening test to evaluate one or more characteristics of the candidate mixtures. For example, the candidate mixtures may be subjected to an accelerated aging or forced degradation test. If desired, the candidate mixtures can be pressed into tablets for the screening test to determine how the mixtures perform in tablet form. Advantageously, the mixtures can be pressed into tablets that are substantially devoid of foreign objects used in the mixing process.

In one example, the powder mixing systems and methods of the present invention are used to perform excipient compatibility studies for pharmaceuticals development. In such studies, the apparatus and methods disclosed herein can be used to create arrays of different powders mixtures and mix them to create good contact between an active pharmaceutical ingredient and one or more excipients. The ability to add moisture in such workflows can be important to, for example, accelerate compability studies or mimic wet milling operations in process development.

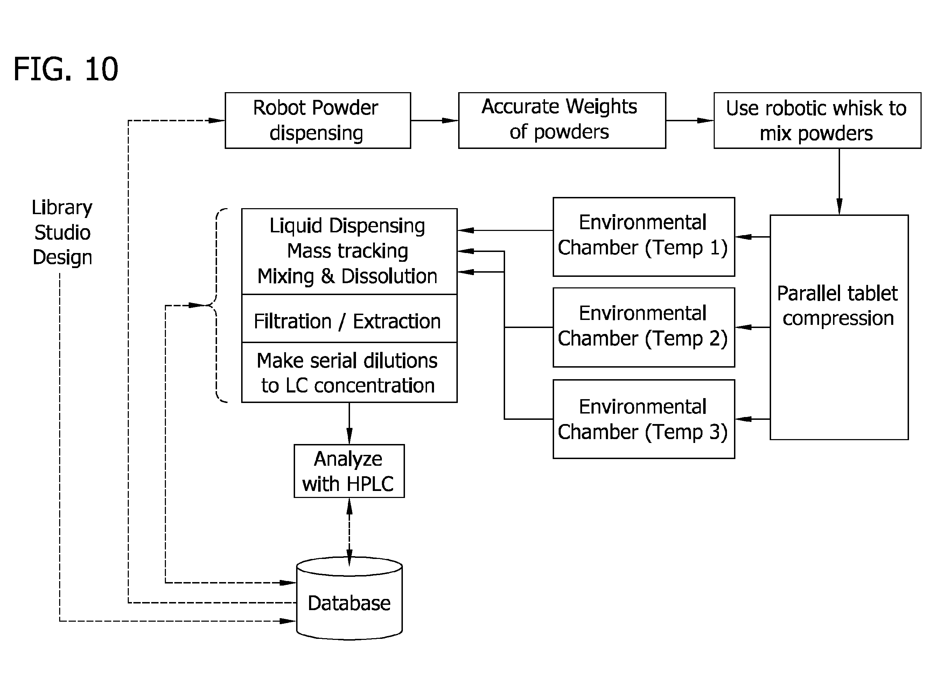

In an exemplary workflow, illustrated in FIG. 10, a many-to-many powder dispensing robot, such as a Symyx Core Module robot system is equipped with a Powdernium® powder dispensing hopper (Symyx Technologies, Inc., Sunnyvale, California) and the powder mixing device 120 described above. The system is used to dispense a powdered drug compound such as acetaminophen along with an array of excipients (400 mg of total sample) into an array of vessels 110 positioned on a vortex mixer (not shown). The powder mixing apparatus 120 is sequentially positioned in each vessel 110 by a robot and is vibrated by the actuator 230 in a pulsing manner to mix the powder bed 112 in each vessel 110. During mixing, the vortex mixer is operated to bring the powder bed off the vessel walls and back to the bottom of the vessel. During the mixing, 5-20% by mass water is added to each sample through the lumen 218 of the powder mixing apparatus 120. After mixing of all samples is complete, the samples are imaged, exposed to elevated temperatures in one of a plurality (e.g., three) environmental chambers, dissolved at specific time points, extracted, and analyzed by HPLC analysis. In view of the disclosure contained herein, other workflows falling within the scope of the invention can be envisioned by the skilled person.

When introducing elements of the present invention or the preferred embodiments thereof, the articles "a", "an", "the", and "said" are intended to be inclusive and mean that there may be additional elements other than the listed elements.

As various changes could be made in the above constructions and methods without departing from the scope of the invention, it is intended that all matter contained in the above description and shown in the accompanying drawings shall be interpreted as illustrative and not in a limiting sense. It follows a list of further embodiments of the invention

Embodiment 1. Apparatus for mixing one or more powdered mixtures, comprising:
a powder dispensing device operable to dispense one or more powders in one or more sample vessels on a platform for holding the one or more sample vessels;
a powder mixing device comprising a cannula and an actuator for vibrating the cannula, the cannula having an internal surface defining a lumen extending from a cannula inlet to a cannula outlet, the cannula inlet and cannula outlet being spaced longitudinally from one another on the cannula;
a transport system providing for relative motion of the powder mixing device and the platform and for introduction of the cannula into the one or more sample vessels; and
a fluid delivery system for delivering a fluid to the outlet to add the fluid to the powder samples.

Embodiment 2. The apparatus of embodiment 1,
wherein:
the transport system includes a robotic arm holding the powder mixing device, the robotic arm being operable to move the powder mixing device relative to the platform.

Embodiment 3. The apparatus of either of the preceding embodiments, wherein:
the fluid delivery system includes a pressurizable reservoir for containing a fluid, a fluid line providing fluid communication between the reservoir and the inlet on the cannula, and a flow control operable to selectively open the fluid line to allow fluid to flow from the pressurized reservoir to the outlet on the cannula and close the fluid line to stop flow of fluid from the reservoir to the outlet.

Embodiment 4. The apparatus of embodiment 3,
wherein the flow control comprises a micro-metering valve.

Embodiment 5. The apparatus of any of the preceding embodiments, further comprising:
a control device operable to control the operation of the powder mixing device, the transport system and the fluid delivery system.

Embodiment 6. The apparatus of any of the preceding embodiments, further comprising:
a sample block mounted on the platform, the sample block being configured to receive the one or more sample vessels.

Embodiment 7. The apparatus of any of the preceding embodiments, further comprising:
a temperature control system for controlling a temperature of the one or more sample vessels on the platform during operation of the powder mixing device.

Embodiment 8. The apparatus of any of the preceding embodiments, wherein:
the transport system includes a detection system for detecting liquid and/or powder levels in the one or more sample vessels.

Embodiment 9. The apparatus of any of the preceding embodiments, wherein:
the powder mixing device includes a plurality of cannulae mounted above the platform for mixing powder samples in a plurality of sample vessels held on the platform in parallel.

Embodiment 10. A method for mixing one or more solid materials, comprising:
introducing a cannula into a vessel containing a powder 5 sample so an end of the cannula extends into the powder sample, the cannula having an internal surface defining a lumen extending from a cannula inlet to a cannula outlet, the cannula inlet and cannula outlet being spaced from one another longitudinally on the cannula;
vibrating the cannula to mix the powder sample; and
using a fluid delivery system to add a fluid to the powder sample via the lumen.

Embodiment 11. A method as set forth in embodiment 10, wherein the outlet is positioned in the powder sample when the fluid is added to the powder sample.

Embodiment 12. A method as set forth in embodiment 10, wherein the oulet is positioned above the powder sample when the fluid is added to the powder sample.

Embodiment 13. A method as set forth in any one of embodiments 10-12, wherein the fluid is added to the powder sample while the cannula is vibrated to mix the powder sample.

Embodiment 14. The method of any of embodiments 10-13 further comprising dispensing one or more powders into the sample vessel by means of a powder dispensing hopper mounted on a robotic arm above the platform to form the powder sample.

Embodiment 15. The method of any of embodiments 11-14, wherein:
adding the fluid comprises spraying the fluid from the cannula outlet.

Embodiment 16. The method of any of embodiments 10 through 15, wherein:
vibrating the cannula comprises exciting the cannula to a predetermined vibration to mix the powder sample.

Embodiment 17. The method of any of embodiments 10 through 16, wherein:
introducing the cannula includes positioning the cannula over the sample vessel using a robotic arm; the method further comprising:
   after the vibrating, removing the cannula from the sample vessel and positioning the cannula over a second sample vessel holding a second powder sample, lowering the cannula into the second sample vessel, and repeating the vibrating for a second powder sample in the second sample vessel to mix the second powder sample.

Embodiment 18. The method of any of embodiments 10 through 17, further comprising:
heating or cooling the sample vessel.

Embodiment 19. A system for mixing one or more powder samples, the system comprising:
a mixing device comprising a cannula having an internal 5 surface defining a lumen, extending from a cannula inlet to a cannula outlet, the cannula inlet and cannula outlet being spaced from one another longitudinally on the cannula;
an actuator operable to vibrate the cannula to mix the one or more powder samples;
a fluid delivery system for adding a fluid to the one or more powder samples, the fluid delivery system comprising a pressurized reservoir containing the fluid, a conduit providing fluid communication between the reservoir and the cannula inlet, and a metering valve operable to selectively 15 open the conduit to allow the fluid to be emitted from the cannula outlet and close the conduit to stop flow of fluid to the outlet; and
a control system operable to control opening and closing of the metering valve to emit a predetermined amount of fluid from the cannula outlet.

Embodiment 20. A system as set forth in embodiment 19 further comprising a transport system and platform for supporting one or more sample vessels, the mixing device being mounted on the transport system, the transport system being operable to move the mixing device relative to the platform.

Embodiment 21. A system as set forth in embodiment 20 wherein the transport system comprises a robotic arm, the mixing device being mounted on the robotic arm.

Embodiment 22. A system as set forth in embodiment 20 wherein the control system is operable to control operation the actuator and transport system.

Embodiment 23. A system as set forth in any of embodiments 20-22 further comprising a sensor operable to detect a position of the cannula relative to a substance to be mixed by the cannula the sensor being in signaling communication with the control system.

Embodiment 24. A system as set forth in any one of embodiments 20-23 further comprising a cannula guide operable to guide movement of the cannula by the transport system into the vessels, the cannula guide comprising a collar having funnel-shaped interior surface positioned to engage the cannula if the cannula is misaligned and move the cannula toward a more aligned position as it is inserted into the vessel.

Embodiment 25. A system as set forth in any of embodiments 19-24 further comprising a powder dispenser for dispensing one or more powdered substances into a vessel to form a powder bed to be mixed by the mixing device, the control system being operable to control the powder dispenser.

Embodiment 26. A system as set forth in any of embodiments 19-25 wherein the actuator comprises a motor mounted on the cannula, the motor being operable to drive rotation of an eccentric mass.

Embodiment 27. A system as set forth in any of embodiments 19-26 wherein the actuator is operable to vibrate the cannula at a frequency in the range of about 20 Hz to about 1000 Hz.

Embodiment 28. A system as set forth in any of embodiments 19-27 further comprising a platform for supporting one or more sample vessels and a temperature control system for controlling the temperature of the sample vessels, the mixing device being operable to mix one or more substances in the sample vessels when they are supported by the platform.

Embodiment 29. A system as set forth in embodiment 28 wherein the platform comprises a block and the temperature control system comprises one or more conduits operable to flow fluid through the block.

Embodiment 30. A method of preparing and screening a plurality of candidate mixtures in relatively smaller quantities, the candidate mixtures being capable of being produced in a relatively larger quantity by a large scale process, said relatively smaller quantity being less than the relatively larger quantity produced in the large scale process, the method comprising:
(a) preparing a relatively smaller quantity of a first of said plurality of candidate mixtures by: (i) inserting a cannula into a first powder bed comprising one or more powders, the cannula having an internal surface defining a lumen extending from a cannula inlet to a cannula outlet spaced longitudinally from the cannula inlet on the cannula; (ii) vibrating the cannula to mix the first powder bed; and (iii) using a fluid delivery system to add a fluid to the first powder bed via the lumen;
(b) repeating (a) for another powder bed until a relatively smaller quantity of each of said plurality of candidate mixtures has been prepared; and
   subjecting said plurality of candidate mixtures to at least one test to evaluate one or more characteristics of the candidate mixtures.

Embodiment 31. A method as set forth in embodiment 30 wherein the adding of the fluid to the powder beds comprises adding a quantity of fluid selected to mimic the large scale process.

Embodiment 32. A method as set forth in embodiment 30 or 31 wherein the large scale process comprises a wet granulation process.

Embodiment 33. A method as set forth in any of embodiments 30-32 wherein said at least one test comprises an accelerated aging test.

Embodiment 34. A method as set forth in any one of embodiments 30-33 further comprising forming each of said plurality of candidate mixtures into a tablet.

Embodiment 35. A method as set forth in embodiment 34 wherein the tablets are substantially devoid of foreign objects used to mix the powder beds.

Embodiment 36. A method as set forth in any of embodiments 30-35 wherein a plurality of different cannulae are used to prepare the relatively smaller quantities of the plurality of candidate mixtures in parallel.

Embodiment 37. A method as set forth in any one of embodiments 30-36 wherein adding the fluid comprises emitting a predetermined amount of the fluid from the cannula outlet into the powder bed.

Embodiment 38. A method as set forth in any one of embodiments 30-37 further comprising adding the fluid while the outlet is positioned in the powder bed.

Embodiment 39. A method as set forth in any one of embodiments 31-38 further comprising adding the fluid while the outlet is positioned above the powder bed.

Embodiment 40. A method as set forth in any of embodiments 31-39 wherein the fluid is added while the cannula is being vibrated to mix the powder bed.

Embodiment 41. A method as set forth in any of embodiments 31-40 wherein the candidate mixtures each comprise less than about 5 grams of material.

## Claims

1. Apparatus for mixing one or more powdered mixtures, comprising:
a powder dispensing device operable to dispense one or more powders in one or more sample vessels on a platform for holding the one or more sample vessels;
a powder mixing device comprising a cannula and an actuator for vibrating the cannula, the cannula having an internal surface defining a lumen extending from a cannula inlet to a cannulae outlet, the cannula inlet and cannula outlet being spaced longitudinally from one another on the cannula;
a transport system providing for relative motion of the powder mixing device and the platform and for introduction of the cannula into the one or more sample vessels; and
a fluid delivery system for delivering a fluid to the outlet to add the fluid to the powder samples.

2. The apparatus of claim 1, wherein:
the transport system includes a robotic arm holding the powder mixing device, the robotic arm being operable to move the powder mixing device relative to the platform.

3. The apparatus of either of the preceding claims, wherein:
the fluid delivery system includes a pressurizable reservoir for containing a fluid, a fluid line providing fluid communication between the reservoir and the inlet on the cannula, and a flow control operable to selectively open the fluid line to allow fluid to flow from the pressurized reservoir to the outlet on the cannulae and close the fluid line to stop flow of fluid from the reservoir to the outlet.

4. The apparatus of claim 3, wherein the flow control comprises a miczo-metering valve.

5. The apparatus of any of the preceding claims, further comprising:
a control device operable to control the operation of the powder mixing device, the transport system and the fluid delivery system.

6. The apparatus of any of the preceding claims, further comprising:
a sample block mounted on the platform, the sample block being configured to receive the one or more sample vessels.

7. The apparatus of any of the preceding claims, further comprising:
a temperature control system for controlling a temperature of the one or more sample vessels on the platform during operation of the powder mixing device.

8. The apparatus of any of the preceding claims, wherein:
the transport system includes a detection system for detecting liquid and/or powder levels in the one or more sample vessels.

9. The apparatus of any of the preceding claims, wherein:
the powder mixing device includes a plurality of cannulae mounted above the platform for mixing powder samples in a plurality of sample vessels held on the platform in parallel.

10. A method for mixing one or more solid materials, comprising:
introducing a cannula into a vessel containing a powder sample so an end of the cannula extends into the powder sample, the cannula having an internal surface defining a lumen extending from a cannula inlet to a cannula outlet, the cannula inlet and cannula outlet being spaced from one another longitudinally on the cannula;
vibrating the cannula to mix the powder sample; and
using a fluid delivery system to add a fluid to the powder sample via the lumen.

11. A method as set forth in claim 10, wherein the fluid is added to the powder sample while the cannula is vibrated to mix the powder sample.

12. The method of any of claims 10 or 11 further comprising dispensing one or more powders into the sample vessel by means of a powder dispensing hopper mounted on a robotic arm above the platform to form the powder sample.

13. The method of any of claims 11 or 12, wherein:
adding the fluid comprises spraying the fluid from the cannula outlet.

14. The method of any of claims 10 through 13, wherein:
vibrating the cannula comprises exciting the cannula to a predetermined vibration to mix the powder sample.

15. The method of any of claims 10 through 14, wherein:
introducing the cannula includes positioning the cannula over the sample vessel using a robotic arm; the method further comprising:
after the vibrating, removing the cannula from the sample vessel and positioning the cannula over a second sample vessel holding a second powder sample, lowering the cannula into the second sample vessel, and repeating the vibrating for a second powder sample in the second sample vessel to mix the second powder sample.
